# EUROPEAN PATENT SPECIFICATION

(11) **EP 4 235 400 B1**
(45) Date of publication and mention of the grant of the patent: **24.07.2024**
(21) Application number: 23177675.8
(22) Date of filing: 28.01.2020
(51) Int. Cl.: G06F 7/58

(54) **COMPUTER-IMPLEMENTED METHOD FOR DECIDING WHETHER A RANDOM NUMBER IS LARGER OR SMALLER THAN A GIVEN THRESHOLD**
COMPUTERIMPLEMENTIERTES VERFAHREN ZUM ENTSCHEIDEN, OB EINE ZUFALLSZAHL GRÖSSER ODER KLEINER ALS EIN GEGEBENER SCHWELLENWERT IST
PROCÉDÉ MIS EN OEUVRE PAR ORDINATEUR PERMETTANT DE DÉCIDER SI UN NOMBRE ALÉATOIRE EST SUPÉRIEUR OU INFÉRIEUR À UN SEUIL DONNÉ

(43) Date of publication of application: 30.08.2023
(62) Divisional of application: 20382048.5
(73) Proprietor: Quside Technologies S.L., 08860 Barcelona (ES); Fundació Institut de Ciències Fotòniques, 08860 Castelldefels (Barcelona) (ES)
(72) Inventor: Abellán Sánchez, Carlos, 08860 CASTELLDEFELS, Barcelona (ES); Martínez Saavedra, José Ramón, 08860 CASTELLDEFELS, Barcelona (ES); Tebbenjohanns, Felix, 08860 CASTELLDEFELS, Barcelona (ES)
(74) Representative: Grünecker Patent- und Rechtsanwälte PartG mbB

(56) References cited:
- GB-A- 2 580 352
- US-A1- 2004 225 842
- US-A1- 2013 028 413
- US-A1- 2015 288 520
- DANIEL LEMIRE: "Fast Random Integer Generation in an Interval", ARXIV.ORG, CORNELL UNIVERSITY LIBRARY, 201 OLIN LIBRARY CORNELL UNIVERSITY ITHACA, NY 14853, 28 May 2018 (2018-05-28), XP081358654, DOI: 10.1145/3230636
- M E O'NEILL: "Efficiently Generating a Number in a Range", 22 July 2018 (2018-07-22), XP055712696, Retrieved from the Internet <URL:https://www.pcg-random.org/posts/bounded-rands.html> [retrieved on 20200708]
- J D PARKER: "The Period of the Fibonacci Random Number Generator", DISCRETE APPLIED MATHEMATICS 20 (1988), 1 January 1988 (1988-01-01), pages 145 - 164, XP055712679, Retrieved from the Internet <URL:https://www.sciencedirect.com/science/article/pii/0166218X88900601> [retrieved on 20200708]

## Description

The present invention relates to a computer-implemented method for deciding whether a random number is larger or smaller than a given threshold according to claim 1 as well as a computer-readable storage medium according to claim 12 and a computing system with a processor, memory, and a comparator according to claim 13.

### Prior Art

Methods for comparing a first number and the second number with each other are commonly known in the prior art. Nowadays systems usually perform subtraction of the second number from the first number in order to determine whether it exceeds the first number (in that case, subtracting it from the first number will yield a negative value) over that is smaller than the first number (in that case subtracting it from the first number will yield a positive number). In some contexts, the first number is called a threshold and the second number may be any number that has to be compared to the threshold. In the context of the invention, this second number is a random number.

The methods explained above are reliable and provide a definite result as they do also provide information on how much the threshold is either exceeded or not exceeded by the given number.

Those methods are also useful in the context of comparing random numbers with such thresholds. For numerical simulations like physical simulations, random numbers that exceed or do not exceed a specific threshold are quite important.

Unfortunately, specifically in the context of random numbers, these methods represent a bottleneck as significant computer resources need to be utilized in order to perform the subtractions specifically in the case of long random numbers (considering for example 128bit resolution methods).

### Problem

Thus, starting from the known prior art, the problem to be addressed by the present invention is to provide a computer-implemented method for deciding whether a random number is larger or smaller than a given threshold, with this method being faster and requiring less computing resources than traditional methods according to the prior art.

### Solution

This problem is solved by the computer-implemented method according to independent claim 1 as well as by the computer-readable storage medium according to claim 12 and the computing system according to claim 13. Preferred embodiments of the invention are provided in the dependent claims.

The computer-implemented method for deciding whether a random number is larger or smaller than a given threshold according to the invention comprises representing the random number and the threshold as a sequence of bits and comparing, by a comparator, the sequence of bits representing the random number with the sequence of bits representing the threshold on a bit-wise basis, wherein the comparison starts with comparing the most significant bit of the sequence of bits representing the random number with the most significant sequence of bits representing the threshold and, if the bits are not equal, deciding that the random number is larger or smaller than the threshold and, if the bits are equal, comparing the immediately following bit in the sequence of bits representing the random number with the immediately following bit in the sequence of bits representing the threshold, wherein this comparing is repeated until the first bit that is not equal in the sequence of bits representing the random number and the sequence of bits representing the threshold is reached (found) or until all bits have been compared and found to be equal.

In regard to this invention, any system will be referred to as a computing system or computer system or processing system that is adapted to receive an input and provide an output where the input is not identical to the output, thus requiring some kind of processing of the input in order to obtain the output. While, according to the invention, also commonly known computers, including also laptops, smartphones and the like, are to be encompassed by the above terms, it is emphasized that the invention is not limited in this regard. In fact, the processing device (or synonymously the computer or computing system) does not even need to include a processor or like component. As the invention basically only requires some kind of a comparator to be present, no other hardware and/or software entities are intended to be necessarily provided with the processing system.

This method reduces the decision-making process from the prior art to a "simple" yes or no decision in the context of deciding whether a given bit is smaller than or larger than or equal to another bit. By doing so and by starting with the most significant bit of the random number, the time required deciding whether or not the random number is larger/smaller than the threshold can be reduced significantly as the decision whether or not a random number is larger or smaller than the given threshold can usually be made before having processed all the bits of both, the threshold and the random number. In cases where the exact value of how much the random number exceeds the threshold or how much it is below the threshold is of no relevance, this provides the intended result (i.e. the decision) with less computing resources and reduces the computing time required. Thereby, the processing of large quantities of random numbers can be improved in both, the required time for processing and the required computing resources for processing.

It is noted that for the invention described above it is not necessary that the random number is already "complete" in that the comparator is provided with the full sequence representing the random number as the comparison is only preformed on the bit-wise basis. Therefore, although the above refers to "a random number", the representation of the random number does not need to be the complete representation of the random number as provided to the comparator because the comparator only performs bit-wise comparison of the random number and the threshold. In the same manner, the threshold does not need to be provided completely (in the sense that the whole sequence of bits would be provided) to the comparator because the comparator only compares the random number to the given threshold on a bit-wise basis.

Thereby, also the data transfer within the computing system that would usually occur when subtracting the first number from the second number can also be kept to a minimum. Furthermore, this reduces the average entropy consumption of the system, since only random bits need to be generated until a decision is made, thus not needing a full set of random bits (and thus, larger entropy from the system's reservoir). This is particularly relevant when using physical random bit and number generators.

In one embodiment, in case all bits are found to be equal, it is determined that the random number and the given threshold are identical.

While the inventive method is usually intended to separate numbers that exceed or do not exceed the given threshold from all other numbers, it can also be intended to include, in the respective determination, the case where the random number and the threshold are equal (for example either in order to discard those values or to use them further).

It can further be provided that, if the random number is found to be smaller or equal to the threshold, the random number is discarded and the comparison is repeated with a new random number; or, if the random number is found to be larger than or equal to the threshold, the random number is discarded and the comparison is repeated with a new random number.

For numerical simulations or encryption, random numbers that exceed or that do not exceed the given threshold can be of relevance. In the further context of this description, unless otherwise stated, reference is made to random numbers that exceed the given threshold. However, the means can, of course, also be applied in an equal manner for the case of requiring random numbers that are below the given threshold.

In any case, by discarding the random numbers that do exceed (or do not exceed) the given threshold already once this determination is made on this bit-wise comparison, the processing a large set of random numbers can be achieved in a significantly reduced amount of time, thereby also increasing the speed of the further processing of the random numbers that exceed (or do not exceed) the threshold for example in the context of simulations or encryption.

The method can further comprise generating the random number using an algorithmic random number generator or a physical random number generator. A physical random number generator may preferably comprise a quantum random number generator. But also other physical random number generators that make use of a (truly) random physical process may be employed.

With this, the inventive method can be used in the context of "on the fly" random choices, for instance a binary yes or no choice, with arbitrarily large resolution on the threshold and the random number, using either already known algorithmic generators or physical random number generators. The algorithmic random number generators usually make use of an initializing value, so-called seed (the date, the time of day or any other value) and use a computer-implemented algorithm to generate a random number. Those random numbers are, however, not true random numbers and are only pseudo-random numbers. Physical random number generators are considered to generate random numbers making use of physical processes like, for example, thermodynamic processes or quantum physical processes like interference of randomly generated laser beams using a laser drive close to or close above the lasing threshold or any other means like, for example, measuring the decay of a radioactive system. Those processes are genuinely random as they cannot be predicted and do not follow a predictable sequence of events (as would be the case when using algorithmic random number generator). Those random numbers are thus truly random and more reliable.

It can also be provided that the comparison is performed during the generating of the random number.

The comparison thus can be used to, for example, monitor the random number generation and determining whether they fulfill the requirements (for example whether they exceed or do not exceed the given threshold) before the whole random numbers are generated. This process can further be used advantageously in controlling the process of generating the random numbers, as well as in performing on-the-fly statistical tests to the random stream.

In one more specific realization, the random number is generated on a bit-wise basis, comprising generating a first bit of the random number and, after that, generating a second bit of the random number, wherein the first bit is more significant than the second bit.

Together with the performing of the comparison during the generating of the random number, this allows for a bit-wise monitoring of the random number generation where, in between the generation of the first bit and the second bit, a comparison can take place.

According to one embodiment, it can be provided that, after the first bit has been generated and before the second bit is generated, the first bit is compared to the correspondingly significant bit of the threshold.

While this results in a somewhat delayed generation of single random numbers, it can nevertheless reduce the time for generating a large number of random numbers (for example billions of random numbers), as the generation of each random number is monitored on a bit-wise basis during which it can be determined whether the requirements (for example exceeding or not exceeding the threshold) are met.

In this embodiment, if it is determined that the first bit is smaller than the correspondingly significant bit of the threshold, it is determined that the random number is smaller than the threshold and, if it is determined that the first bit is larger than the correspondingly significant bit of the threshold, it is determined that the random number is larger than the threshold.

In a more specific case, the second bit is generated if it is determined that the first bit is larger than or equal to the correspondingly significant bit of the threshold or the second bit is generated if it is determined that the first bit is smaller than or equal to the correspondingly significant bit of the threshold.

Thereby, the outcome of the comparison is directly used for controlling the further generation of the random numbers.

Moreover, in one embodiment, if it is determined that the random number will be smaller than or equal to the given threshold, the generation of the random number is aborted and a new random number is generated; or, if it is determined that the random number is larger than or equal to the given threshold, the generation of the random number is aborted and a new random number is generated.

With this, only the full random numbers that comply with the requirement (e.g., exceeding or not exceeding the threshold) are generated, thereby significantly saving computing resources for the generation of random numbers for those cases in which the requirements Have already been either met or failed. In total, when considering the generation of the random numbers using physical processes, this way of monitoring and controlling the random number generation using the bit-wise comparison according to the invention saves computing resources and at the same time reduces the time for generating the needed random numbers.

The method can further comprise using the random number, if the random number is determined to be larger than the given threshold, in at least one of encryption of data, encryption of data transmission, a numerical simulation.

With this, the generated random numbers can be used in processes that make use of random numbers at high generation rates, such as those used in data transmission via the internet for sensitive data or numerical simulations, like physical simulations of large systems.

The computer-readable storage medium, according to the invention comprises computer-executable instructions that, when executed by a computer comprising a comparator, cause the computer to perform a method according to any of the preceding embodiments.

With this computer-readable storage medium, the advantages of the inventive method can be applied to the computing systems.

The computing system according to the invention comprises a processor, memory accessible by the processor and a comparator, wherein the computing system is adapted to execute a method according to any of the preceding embodiments.

This computing system makes use of the advantages of the inventive method.

In this regard, it can be provided that the computing system further comprises an algorithmic or physical random number generator for generating a random number and wherein the computing system is adapted to provide a sequence of bits representing the random number to the comparator.

With this, the advantages of the inventive method are combined with physical random number generators or algorithmic random number generators as needed.

### Brief Description of the Drawings

- Figure 1: Shows a schematic flow diagram of a method according to one embodiment
- Figure 2: Shows a further flow diagram illustrating the process flow of a method according to a further embodiment
- Figure 3: Shows a schematic depiction of a computing system on which the method according to the invention may be implemented

### Detailed Description

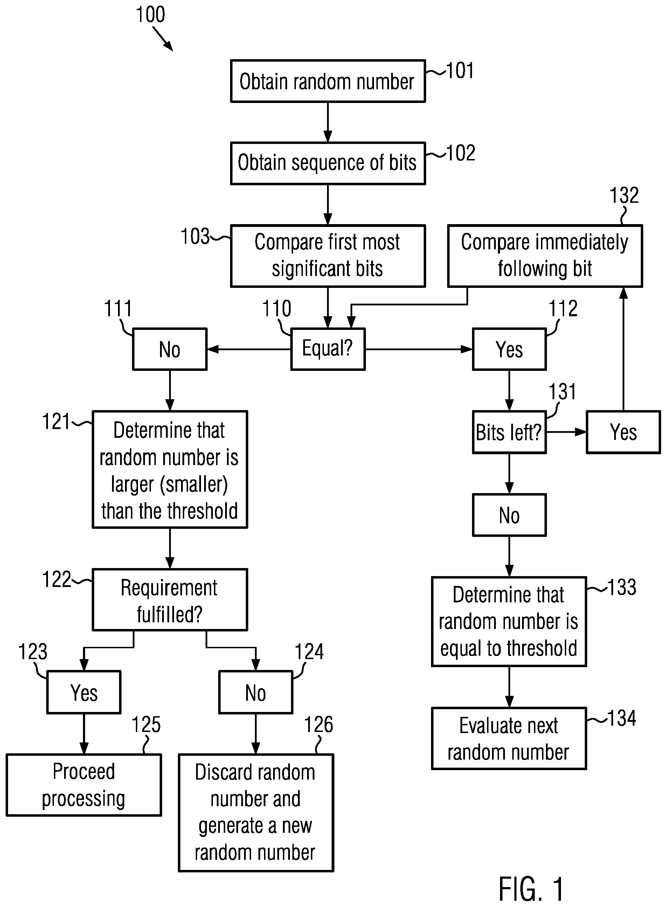

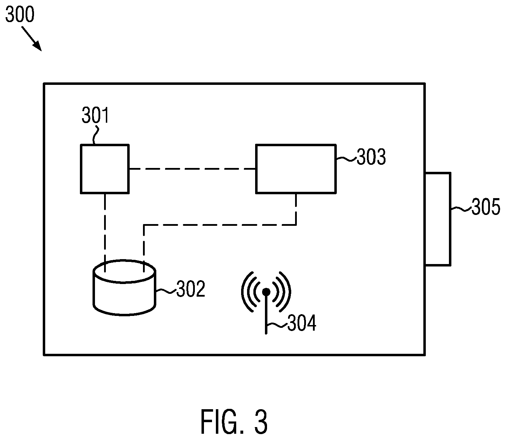

Figure 1 shows a schematic flow diagram of the steps performed in a method 100 for deciding whether a random number is larger or smaller than a given threshold. This method may be implemented on any suitable computing system and can also be provided in an encoded form on a computer-readable storage media like a CD, a flash drive or any other suitable storage media. An example of a corresponding computing system will be provided in Figure 3.

For the method that follows, it is assumed that a threshold value exists. This threshold may be considered a natural or real number greater than 0. It can have any value, but the method is most advantageous in the case of large numbers (in the order of 2¹²⁸ in the case of 128bit precision). The threshold value is available to the computing system applying the method, and it might be provided by a user or a computing program that makes use of the random numbers that might be the outcome of the method according to some embodiments of the invention.

The threshold can be an arbitrary number, for example it can in itself be a randomly generated number that is, however, fixed for at least one phase of the processing where at least two random numbers are utilized. It could also be thought of other realizations where the threshold value changes for each random number to be compared to the respective threshold value. The description below, however, assumes a fixed threshold value. The skilled person, can, however, easily apply the respective teaching also to changing threshold values.

In any case, as indicated above, it is assumed that the threshold value is already available to the underlined computing system.

In this regard, the method 100 begins in step 101 with obtaining a random number. The random number can be obtained in any suitable manner. Specifically, for generating or obtaining the random number, a random number generator can be used. On the other hand, it is also possible to already provide purposely generated random numbers to the computing system that is about to perform the respective method 100. For example, previously generated random numbers (like for example an amount of 1 GB of random numbers where each random number is a 128-bit long number) can be provided from an external storage medium or via data transfer means like wireless means or cabled connections or via the internet to the computing system for performing the method 100. If random number generators are used, the method is not limited to cases where the random number is already fully created or calculated and is then provided on a manner that it can be obtained in step 101. In fact, the method also allows for obtaining the random number in step 101 in a bit-wise manner. This is a consequence of what happens in step 102 where a sequence of bits corresponding to the random number is obtained for further use. In case the random number is provided as a humanly readable random number, i.e. not in the form of binary code, this humanly readable random number can be represented in a sequence of bits using the commonly known techniques for transforming a number into a sequence of bits. In case the random numbers are generated "on the fly" by using a random number generator, it is preferred that this generation is performed it a bit-wise manner i.e. each bit of the random number is generated separately. In this way, it is possible to provide the random number on a bit per bit basis (i.e. the random number is not already fully created) in step 102.

Irrespective whether the full random number is already obtained and correspondingly a full sequence of bits is already obtained, the next steps of the method use only a single bit of the corresponding sequences of bits of the threshold and of the random number for performing a bit-wise comparison.

In step 103, the most significant bit of the random number (i.e. its representation in the form of a sequence of bits) and the most significant bit of the threshold (i.e. its representation in the form of a sequence of bits) are compared. This comparison is preferably performed by a one-bit comparator as this is most suitable and most efficient in carrying out this comparison. However, the invention is not restricted to such a one-bit comparator and any other means for performing the comparison can be used as well.

During this comparison step 103, the comparator determines whether the first most significant bit of the random number and the first most significant of the threshold are equal 110. If it is determined in step 110 that they are not equal (111), it is determined that the random number is larger (or smaller) than the threshold in step 121.

The case where the most significant bits (step 121) are not equal can only be obtained by two instances. In the first instance, the most significant bit of the random number is 1 and the most significant bit of the threshold is 0. In this case, the random number will be, in any case and completely independent from all following bits, larger that the threshold. The other case is where the most significant bit of the random number is 0 and the most significant bit of the threshold is 1. In this case, the random number is definitely smaller than the threshold.

In a next step 122 which is optional, it can then be determined whether a specific requirement is fulfilled. For example, for the method 100 it can be intended to only process further random numbers that are larger than the threshold. This requirement will thus only be fulfilled for random numbers that are in fact determined to be larger than the threshold. Random numbers that are smaller than or equal to the threshold will not fulfill this requirement. The other way around is, of course, also possible, i.e. it can be required for example that the random numbers must be smaller than the given threshold for further processing. As indicated above, this requirement step, however, is optional and does not need to be implemented such that the method 100 could already end with step 121 where it is determined that the random number is smaller or larger than the threshold.

If, however, step 122 is provided, two decisions are possible. Either, it is determined in step 123 that the requirement is fulfilled. Then the processing of the random number is proceeded with in step 125. Further processing of this random number can, for example, comprise using the respective number in numerical simulations or in encrypting data transfer or in encrypting data. Other means or processes can be thought of as well.

If it is determined 122 that the requirement is not fulfilled (124), the random number can be discarded in step 126 and a new random number can be obtained which will result in the method resuming with step 101. It is also possible that no new random number is obtained (because none are left, or the process is intended to end) and the method will just end.

The step 126 and also the corresponding step of ending the method can also immediately follow after step 121 without the decision-making in step 122.

Returning to the comparison in step 110 where it is determined whether the first most significant bits of the random number and the threshold are equal, another option exists. In this step 112 it can be determined for the first significant bits that they are equal. If this is determined in step 112, a decision regarding whether or not the random number is equal or not equal to the threshold cannot be made. This is because two numbers cannot be determined to be equal only based on comparing their first most significant bits. It can only be decided that they are not equal if their respective most significant bits are not equal. In that case, it is determined if there are any bits left for comparison in step 131. When the method 100 begins with the first most significant bit in step 103, this question is most likely to be answered in the affirmative because random numbers constituted by only a single bit will usually not be used with the inventive method as the advantages become more important the longer the random numbers actually are.

However, for the sake of discussion it is assumed that this step is also included for the first most significant bits being compared to each other. If it is determined that there are bits left, the next significant bit is taken, and the respective bits of the random number and the threshold are compared to each other in step 132. This means, compared to the previous run of the method that compared the first most significant bit *r*₁ of the random number with the most significant bit *t*₁ of the threshold, now bits *r*₂ and *t*₂ are compared. Generally, after comparing bits *rᵢ* and *tᵢ* the next turn will compare bits *r*_{*i*+1} and *t*_{*i*+1}.

A determination following step 110 is then made again for these bits. Once again, this can lead to the finding that these bits are equal (step 112), or that they are not equal (step 111). If they are not equal, the process following step 111 is performed. In fact, if the next significant bits are determined to not be equal, it can immediately determine that the random number is different from the threshold.

If those next significant bits are still equal (step 112) the method needs to resume with step 132 if there are bits left (step 131) and compare those bits in order to determine once again in step 110 whether those bits are equal or not.

If, in this course of action, it is determined in step 131 that no bits are left, it can be determined in step 133 that the random number is in fact equal to the threshold (if all bits of two numbers are equal, the numbers are equal).

In that case, it can be proceeded with step 134 and a new random number can be taken where optionally the random number that is considered to be equal to the threshold can be discarded.

However, depending on, for example, requirements for the further processing of the random numbers, it can also be the case that the random numbers are to be used that are not smaller than the given threshold. In such a case, random numbers that are larger or equal to the threshold would be used further (like in step 125). This branch, however, is not explicitly shown in the flow diagram of Figure 1. In any case, the further processing after step 133 can be equal to the processing in the steps 125 or 126 if a further step corresponding to step 122 in included.

As indicated above, one of such requirements could be to use random numbers further that are at least not smaller than the threshold. However, it is also possible to discard any random number that is determined to be equal to the threshold. This can be specifically advantageous in cases where the random number is used for encryption.

As already indicated above, for the method according to Figure 1, it is of no relevance whether already the full random number is obtained in steps 101 and 102 as the comparison takes place on a bit-wise basis for example by the respective one-bit comparator. While this allows for methods where either the whole random number is provided and obtained (and correspondingly the whole sequence of bits), this also allows for methods where the random number or its corresponding sequence of bits is obtained on a bit per bit basis starting with the first most significant bit.

Where the random number is already fully available (because it is pre-created for example), there is no advantage in either obtaining the full sequence of bits compared to not obtaining the full sequence of bits and only obtaining the first most significant bit of this sequence. However, in cases where the random number is not yet fully created, the method as explained with respect to Figure 1 can advantageously be used to control the generation of the random numbers. For example, the method described in Figure 1 could be used to generate a biased distribution of numbers from an unbiased random number generation source by only choosing those random numbers for further processing that exceed the threshold (or that do not exceed it, for example).

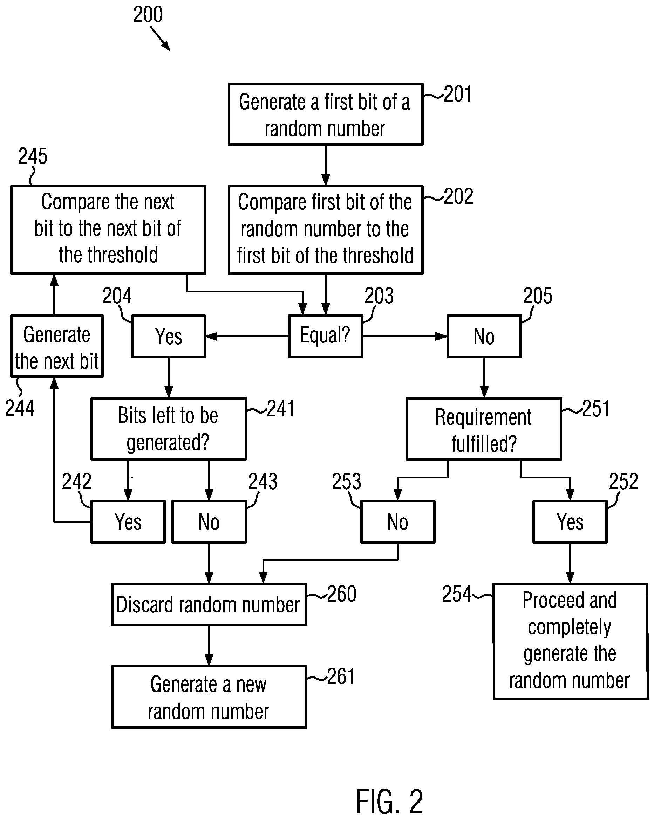

In the embodiment of Figure 2, it can be advantageous to provide each bit generated for the random number to the comparator (or other appropriate means) to perform the respective comparison and decide, based on the outcome of this comparison, whether or not to obtain a second bit of this random number. This will be explained in further detail with respect to Figure 2.

In Figure 2, the comparison is performed during the creation of the random number.

The method will ultimately begin with step 201 where the first bit of the random number is created. Once again, it will be assumed that the threshold is already fully available to the computing system carrying out the respective method. Obtaining or creating the threshold value and its respective sequence of bits will thus not be considered further here and can be done in an arbitrary manner.

The creation of the random number can be performed in any suitable way using, for example, algorithmic random number generators of physical random number generators as already explained above. The invention is not limited in this regard. However, the respective random number generators need to be able to create the random number in the form of a sequence of bits such that it is preferably possible to stop the generation of the random number with each bit generated and to wait for the outcome of the respective comparison. This can be achieved by using random number generators that only generate values 0 and 1 in an arbitrary and random manner in sequence.

Once this first bit of the random number is generated, this first bit is considered to be the most significant bit of the random number and it is compared to the first bit (i.e. the most significant bit) of the threshold in step 202. This comparison is carried out in one of the ways as already described with respect to Figure 1 as the process described in Figure 1 performs a bit-wise comparison of bits of the random number and the threshold.

If it is determined in step 203 and 205 that the first bit of the random number is not equal to the first bit of the threshold, it is (implicitly) determined that the random number that is about to be generated is different from the threshold. If this is the case, a further step as already explained with respect to Figure 1 can be included. This step can comprise determining whether a specific requirement is fulfilled in step 251. This requirement can, for example, be that the random number that is to be generated must be larger (or smaller) than the threshold. For the further explanation, it will be assumed that the requirement is that the random number to be generated is larger than the threshold. If it is determined that this is the case (step 252, which will only be the case if the most significant bit of the random number is 1 and the most significant bit of the threshold is 0), it is proceeded with the generation of the random number in step 254. This can be proceeded without using any further comparison step 202 because it is already known that the random number that is generated at the end of the method will be larger than the threshold from the comparison of the first most significant bit.

If the requirement is not fulfilled (step 253), the random number can be discarded in step 260 which means that it is not proceeded with creating the full sequence of bits that will constitute the random number, but potentially a new random number could be generated in step 261. Generating this new random number will usually comprise simply generating a further bit with the random number generator and using this further generated bit as "first bit" in step 201 for the "new random number".

Returning to the method in step 202 and the determination whether the first bit of the random number is equal to the first bit of the threshold, another option exists. If it is determined in step 204 that those two bits are in fact equal, it is (optionally) determined in step 241 whether there are any bits left for generation. If only one bit has been created so far, it will usually be the case that further bits are to be generated. In any case, this determination in step 241 is made based on the fact that the bit length of the random number to be generated is usually already known to the system. For example, the task can be to generate a sequence of random numbers having a length of 128bits. If only one bit has already been created, 127 bits are still to be done. If the method is already proceeded to some degree and, for example, 115 bits have already been created for a given random number, less bits will still need to be created. If all bits have been created for the respective random number, it would be determined in step 243 that no further bits are left for generation and, because it is determined in step 204 that also the last bit of the random number that is generated is equal to the threshold, the random number is equal to the threshold and the random number could be discarded. This is in line with step 260 as already explained previously.

If it is determined in step 241 with decision 242 that there are still bits left to be generated, the next bit is generated in step 244. This then generated "second" bit (or any consecutive bit) is then compared to the corresponding bit of the threshold. This means that if, for example, out of 128 bits, the bit with number 97 is just created for the random number, this bit is compared to the corresponding bit number 97 of the threshold in step 245. This comparison is performed in the way as it is performed in step 202 and correspondingly, it is determined in correspondence with step 203 whether this respective bit is equal to the bit of the threshold. Once again, decisions 204 or 205 can be made and it can thus be determined based on this second bit whether the random number is different from the threshold (for example larger or smaller).

Based on this decision, it is then either proceeded further with creating bits of the random number or this "random number under generation" is discarded and the generation of a new random number can be started if it is determined, for example, that the random number that would be created when proceeding further is smaller than the threshold.

It is once again noted that this method is specifically advantageous the longer the random numbers to be generated actually are. This is basically because the decision whether or not the generated sequence of random bits represents a random number that is larger or smaller than the threshold can usually be made very fast. Indeed, in many cases this decision can already be made when having generated the first 3, 4 or 5 bits of the random number. Thus, for a 128 bit random number that is to be generated, it can already be determined after less than 5% of the amount of bits generated, whether the random number will exceed the threshold or not, thereby allowing for stopping the generation of the current random number if it does not fulfill the condition of exceeding (or not exceeding) the threshold and starting the generation of a new random number for a new decision.

Figure 3 shows a schematic depiction of an underlying computing system 300 with a limited number of components. In this depiction, there is provided schematically a computing system like a personal computer, a server, a server farm or any other suitable computing means. This computing system comprises at least one processor 301 or can, of course, also comprise a plurality of processors. Furthermore, a memory 302 like a hard drive is associated with the processor such that the processor can access data and computing programs stored on the respective memory. Additionally, a comparator 303, preferably a one-bit comparator is provided in the computing system. This can either be implemented as hardware or as software or both.

In any case, the respective computing system 300 is adapted to perform the method according at least one embodiment as explained above. For this purpose, the memory 302 comprises computer-readable instructions (program code) for performing a method, for example, in line with the embodiment described in Figure 1 or with the embodiment described with respect to Figure 2.

Further means of the computing system like means for data transfer 304 (wireless or cabled) or means 305 for attaching separate data storages can also be provided but are commonly known to the skilled person and will thus not be explained here in further detail.

As is seen from the above, the inventive method allows for deciding whether or not a random number exceeds a specific threshold with very few operations. Though, in principle, the process described can be repeated until the last bit is determined (in case all preceding bits are equal) in order to ultimately determine whether the generated random number is equal to, larger than or smaller than the threshold, this process can also be ended or aborted earlier, for example after having generated only the most significant bit or the first 3 significant bits. Thereby, it can be ensured that the generation of full random numbers is only processed further, if it is already determined right or almost at the beginning that the random number that will be generated is definitely larger than the threshold.

In the description above, it was assumed that a single random number is generated and is to be compared against a single threshold in order to determine whether it exceeds the threshold or does not exceed the threshold. However, the invention is not limited in this regard. For example, the inventive concept can also be extended to methods where there are more than one threshold against which the random number that is currently created is to be compared. The comparing of the bits of the random number against each of the thresholds can be done according to any of the previously described embodiments.

For example, there may be provided n (n being an arbitrary natural number greater than 1) thresholds where the thresholds constitute pairwise disjoint numbers. When generating the random number as explained above on a bit-wise basis, each generated bit or the generated sequence of bits constituting the random number can be compared for each bit generated against the corresponding bit or bits in each of the thresholds. By this, for each new bit, a decision (yes or no) can be made for each of the thresholds whether the to be generated random number will exceed the threshold or it will not exceed the threshold.

This ultimately allows for creating a plurality of one-bit decisions (yes or no) from the respective comparisons by only creating a single random number. For example, considering a random number of the length of 128 bits, a random number can be calculated that can reasonably be compared against billions of thresholds having different values, thereby allowing for creating billions of decision bits from the 128 bit created random number where it is also possible that it is not even necessary to create all the 128 bits of this random number as the respective decisions can usually be made after having only created a subset of those 128 bits.

Consequently, by generating just a single bit or 2 or 3 bits out of a random number that, in the end when it is finally created, will be a number of a length of 128 bits can be sufficient to already make hundreds or thousands or even more decisions.

These decisions are, in one embodiment made at least partially in parallel by comparing the bits already generated for the random number against each of the thresholds in parallel, thereby also arriving at a fast decision-making when using parallel calculations.

It is also noted that with this process of comparing the bits of the to be generated random number against the thresholds, decisions that will not result in further information can be avoided. Considering, for example, three different thresholds of arbitrary (but fixed) length, for example 128bit, and a random number that is generated having the same length when it is finally completely generated.

Assuming that after having generated the first 2 bits of this random number, it is arrived at the decision that this random number exceeds the first and the second threshold, generating a further bit will not provide additional information that is useful for making the decision whether or not the first and second thresholds are exceeded by the to be generated random number. The full random number would thus not need to be created as no additional information in terms of whether or not the random number will exceed the first and second threshold can be obtained.

For the third threshold, it may be that the first 2 bits were not sufficient for the decision making (because the first two bits of the random number and of the third threshold are identical) and this decision can only be made after having created the third bit. Upon also having made this decision, i.e. whether the to be generated random number will exceed the third threshold or will be smaller than the third threshold, creating each successive bit will not add any information to the already made decisions.

It would thus be reasonable to abort the decision-making or at least the generation of the random number at this point because all relevant decisions (does the to be generated random number exceed the thresholds or not) are already made. This significantly saves computing resources if the further processing does not depend on the actual random number that would finally be created (i.e. its definite value) but it is only intended to make random decisions by truly random numbers.

It is clear that this process can be extended to any number of thresholds as long as the number of thresholds does not exceed the maximum value of the to be generated random number. For a random number having potentially 128 bits, it would, for example, not be reasonable to make decisions against thresholds ranging from 0 to 2¹³⁰ because at least for the values exceeding 2¹²⁸, this decision would always yield "no".

With the above-described method of comparing a random number against a plurality of thresholds, it is also possible to create biased random number distributions by, for example, only further processing random numbers that are within a specific interval (for example that are larger than a first threshold and smaller than a second threshold).

## Claims

1. A computer-implemented method for deciding whether a random number is larger or smaller than a plurality of thresholds, the method comprising representing the random number and each of the plurality of thresholds as a sequence of bits and comparing, for each of the plurality of thresholds, by a comparator, the sequence of bits representing the random number with the sequence of bits representing the threshold on a bit-wise basis, wherein the comparison starts with comparing the most significant bit of the sequence of bits representing the random number with the most significant sequence of bits representing the threshold and, if the bits are not equal, deciding that the random number is larger or smaller than the threshold and, if the bits are equal, comparing the immediately following bit in the sequence of bits representing the random number with the immediately following bit in the sequence of bits representing the threshold, wherein this comparing is repeated until the first bit that is not equal in the sequence of bits representing the random number and the sequence of bits representing the threshold is reached or until all bits have been compared and found to be equal, the method comprising only processing further random numbers that are larger than a first threshold of the plurality of thresholds and smaller than a second threshold of the plurality of thresholds.

2. The method according to claim 1, wherein in case all bits are found to be equal, it is determined that the random number and the given threshold are identical.

3. The method according to claim 1 or 2, wherein, the method comprises creating a biased random number distribution by only processing further random numbers that are larger than the first threshold of the plurality of thresholds and smaller than the second threshold of the plurality of thresholds.

4. The method according to any of claims 1 to 3, wherein the method further comprises generating the random number using an algorithmic random number generator or a physical random number generator.

5. The method according to claim 4, wherein the comparison is performed during the generating of the random number.

6. The method of claim 5, wherein the random number is generated on a bit-wise basis, comprising generating a first bit of the random number and, after that, generating a second bit of the random number, wherein the first bit is more significant than the second bit.

7. The method according to claim 6, wherein, after the first bit has been generated and before the second bit is generated, the first bit is compared to the correspondingly significant bit of each of the plurality of thresholds.

8. The method according to claim 7, wherein, if it is determined that the first bit is smaller than the correspondingly significant bit of the threshold, it is determined that the random number is smaller than the threshold and, if it is determined that the first bit is larger than the correspondingly significant bit of the threshold, it is determined that the random number is larger than the threshold.

9. The method according to any of claims 1 to 8, wherein the random number is compared against exactly two thresholds, wherein the first threshold is smaller than the second threshold.

10. The method according to claim 9, wherein, if it is determined that the random number will be smaller than or equal to the first threshold, the generation of the random number is aborted; and/or if it is determined that the random number will be larger than or equal to the second threshold, the generation of the random number is aborted and a new random number is generated.

11. The method according to any of claims 9 to 10, wherein the method further comprises using the random number, if the random number is determined to be larger than the first threshold and smaller than the second threshold, in at least one of encryption of data, encryption of data transmission, a numerical simulation.

12. A computer-readable storage medium comprising computer-executable instructions that, when executed by a processing device comprising a comparator, cause the computer to perform a method according to any of claims 1 to 11.

13. A computing system comprising a processor, memory accessible by the processor and a comparator, wherein the computing system is adapted to execute a method according to any of claims 1 to 11.

14. The computing system according to claim 13, wherein the computing system further comprises an algorithmic or physical random number generator for generating a random number and wherein the computing system is adapted to provide a sequence of bits representing the random number to the comparator.

## Patentansprüche

1. Computerimplementiertes Verfahren, mit dem darüber entschieden wird, ob eine Zufallszahl über oder unter einer Vielzahl von Schwellenwerten liegt, wobei das Verfahren umfasst, dass die Zufallszahl und jeder der Vielzahl von Schwellenwerten als eine Sequenz von Bits dargestellt werden und für jeden der Vielzahl von Schwellenwerten die Sequenz von Bits, die die Zufallszahl darstellt, mittels eines Komparators bitweise mit der Sequenz von Bits verglichen wird, die den Schwellenwert darstellt, wobei der Vergleich damit beginnt, dass das höchstwertige Bits der Sequenz von Bits, die die Zufallszahl darstellt, mit der höchstwertigen Sequenz von Bits verglichen wird , die den Schwellenwert darstellt, und, wenn die Bits nicht gleich sind, entschieden wird, dass die Zufallszahl über oder unter dem Schwellenwert liegt, und, wenn die Bits gleich sind, das unmittelbar folgende Bit in der Sequenz von Bits, die die Zufallszahl darstellt, mit dem unmittelbar folgenden Bit in der Sequenz von Bits verglichen wird, die den Schwellenwert darstellt, wobei dieser Vergleich wiederholt wird, bis das erste Bit in der Sequenz von Bits, die die Zufallszahl darstellt, und der Sequenz von Bits, die den Schwellenwert darstellt, das nicht gleich ist, erreicht ist, oder bis alle Bits verglichen worden sind und sich als gleich erwiesen haben, wobei das Verfahren nur Verarbeiten weiterer Zufallszahlen umfasst, die über einem ersten Schwellenwert der Vielzahl von Schwellenwerten und unter einem zweiten Schwellenwert der Vielzahl von Schwellenwerten liegen.

2. Verfahren nach Anspruch 1, wobei für den Fall, dass sich alle Bits als gleich erweisen, festgestellt wird, dass die Zufallszahl und der vorgegebene Schwellenwert identisch sind.

3. Verfahren nach Anspruch 1 oder 2, wobei das Verfahren umfasst, dass eine beeinflusste Verteilung von Zufallszahlen geschaffen wird, indem nur weitere Zufallszahlen verarbeitet werden, die über dem ersten Schwellenwert der Vielzahl von Schwellenwerten und unter dem zweiten Schwellenwert der Vielzahl von Schwellenwerten liegen.

4. Verfahren nach einem der Ansprüche 1 bis 3, wobei das Verfahren des Weiteren umfasst, dass die Zufallszahl unter Einsatz eines algorithmischen Zufallszahlengenerators oder eines physikalischen Zufallszahlengenerators generiert wird.

5. Verfahren nach Anspruch 4, wobei der Vergleich während des Generierens der Zufallszahl durchgeführt wird.

6. Verfahren nach Anspruch 5, wobei die Zufallszahl bitweise generiert wird, und es umfasst, dass ein erstes Bit der Zufallszahl generiert wird und danach ein zweites Bit der Zufallszahl generiert wird, wobei das erste Bit höherwertig ist als das zweite Bit.

7. Verfahren nach Anspruch 6, wobei, nachdem das erste Bit generiert worden ist und bevor das zweite Bit generiert wird, das erste Bit mit dem Bit mit entsprechender Wertigkeit jedes der Vielzahl von Schwellenwerten verglichen wird.

8. Verfahren nach Anspruch 7, wobei, wenn festgestellt wird, dass das erste Bit kleiner ist als das Bit mit entsprechender Wertigkeit des Schwellenwertes, festgestellt wird, dass die Zufallszahl unter dem Schwellenwert liegt, und, wenn festgestellt wird, dass das erste Bit größer ist als das Bit mit entsprechender Wertigkeit des Schwellenwertes, festgestellt wird, dass die Zufallszahl über dem Schwellenwert liegt.

9. Verfahren nach einem der Ansprüche 1 bis 8, wobei die Zufallszahl mit genau zwei Schwellenwerten verglichen wird und der erste Schwellenwert kleiner ist als der zweite Schwellenwert.

10. Verfahren nach Anspruch 9, wobei, wenn festgestellt wird, dass die Zufallszahl unter oder auf dem ersten Schwellenwert liegen wird, die Generierung der Zufallszahl abgebrochen wird, und/oder, wenn festgestellt wird, dass die Zufallszahl über oder auf dem zweiten Schwellenwert liegen wird, die Generierung der Zufallszahl abgebrochen und eine neue Zufallszahl generiert wird.

11. Verfahren nach einem der Ansprüche 9 bis 10, wobei das Verfahren des Weiteren umfasst, dass, wenn festgestellt wird, dass die Zufallszahl über dem ersten Schwellenwert und unter dem zweiten Schwellenwert liegt, die Zufallszahl bei Verschlüsselung von Daten, Verschlüsselung von Datenübertragung oder/und einer numerischen Simulation eingesetzt wird.

12. Computerlesbares Speichermedium, das computerausführbare Befehle umfasst, die, wenn sie von einer Verarbeitungsvorrichtung ausgeführt werden, die einen Komparator umfasst, den Computer veranlassen, ein Verfahren nach einem der Ansprüche 1 bis 11 durchzuführen.

13. Computersystem, das einen Prozessor, einen Speicher, auf den der Prozessor zugreifen kann, sowie einen Komparator umfasst, wobei das Computersystem zum Ausführen eines Verfahrens nach einem der Ansprüche 1 bis 11 eingerichtet ist.

14. Computersystem nach Anspruch 13, wobei das Computersystem des Weiteren einen algorithmischen oder physikalischen Zufallszahlengenerator zum Generieren einer Zufallszahl umfasst und das Computersystem so eingerichtet ist, dass es dem Komparator eine Sequenz von Bits bereitstellt, die die Zufallszahl darstellen.

## Revendications

1. Procédé mis en œuvre par ordinateur pour décider si un nombre aléatoire est supérieur ou inférieur à une pluralité de seuils, le procédé comprenant une représentation du nombre aléatoire et de chacun de la pluralité de seuils sous forme d'une séquence de bits et une comparaison, pour chacun de la pluralité de seuils, par un comparateur, de la séquence de bits représentant le nombre aléatoire avec la séquence de bits représentant le seuil en termes de bits, dans lequel la comparaison commence par une comparaison du bit de poids le plus fort de la séquence de bits représentant le nombre aléatoire avec la séquence de bits de poids le plus fort représentant le seuil et, si des bits ne sont pas égaux, une décision que le nombre aléatoire est supérieur ou inférieur au seuil et, si les bits sont égaux, une comparaison du bit immédiatement suivant dans la séquence de bits représentant le nombre aléatoire avec le bit immédiatement suivant dans la séquence de bits représentant le seuil, dans lequel cette comparaison est répétée jusqu'à ce que le premier bit qui n'est pas égal dans la séquence de bits représentant le nombre aléatoire et la séquence de bits représentant le seuil soit atteint, ou jusqu'à ce que tous les bits aient été comparés et identifiés comme égaux, le procédé comprenant uniquement un traitement d'autres nombres aléatoires qui sont supérieurs à un premier seuil de la pluralité de seuils et inférieurs à un deuxième seuil de la pluralité de seuils.

2. Le procédé selon la revendication 1, dans lequel au cas où tous les bits sont identifiés comme égaux, il est déterminé que le nombre aléatoire et le seuil donné sont identiques.

3. Le procédé selon la revendication 1 ou 2, dans lequel, le procédé comprend une création d'une distribution biaisée de nombres aléatoires en traitant uniquement d'autres nombres aléatoires qui sont supérieurs au premier seuil de la pluralité de seuils et inférieurs au deuxième seuil de la pluralité de seuils.

4. Le procédé selon l'une quelconque des revendications 1 à 3, dans lequel le procédé comprend en outre une génération du nombre aléatoire au moyen d'un générateur algorithmique de nombre aléatoire ou d'un générateur physique de nombre aléatoire.

5. Le procédé selon la revendication 4, dans lequel la comparaison s'effectue au cours de la génération du nombre aléatoire.

6. Le procédé de la revendication 5, dans lequel le nombre aléatoire est généré en termes de bits, comprenant une génération d'un premier bit du nombre aléatoire et, après cela, une génération d'un deuxième bit du nombre aléatoire, dans lequel le premier bit est d'un poids plus fort que le deuxième bit.

7. Le procédé selon la revendication 6, dans lequel, après que le premier bit a été généré et avant que le deuxième bit ne soit généré, le premier bit est comparé au bit de poids correspondant de chacun de la pluralité de seuils.

8. Le procédé selon la revendication 7, dans lequel, s'il est déterminé que le premier bit est inférieur au bit de poids correspondant du seuil, il est déterminé que le nombre aléatoire est inférieur au seuil et, s'il est déterminé que le premier bit est supérieur au bit de poids correspondant du seuil, il est déterminé que le nombre aléatoire est supérieur au seuil.

9. Le procédé selon l'une quelconque des revendications 1 à 8, dans lequel le nombre aléatoire est comparé à exactement deux seuils, dans lequel le premier seuil est inférieur au deuxième seuil.

10. Le procédé selon la revendication 9, dans lequel, s'il est déterminé que le nombre aléatoire est inférieur ou égal au premier seuil, la génération du nombre aléatoire est abandonnée ; et/ou s'il est déterminé que le nombre aléatoire est supérieur ou égal au deuxième seuil, la génération du nombre aléatoire est abandonnée et un nouveau nombre aléatoire est généré.

11. Le procédé selon l'une quelconque des revendications 9 et 10, dans lequel le procédé comprend en outre une utilisation du nombre aléatoire, si le nombre aléatoire est déterminé comme supérieur au premier seuil et inférieur au deuxième seuil, dans au moins un d'un chiffrement de données, d'un chiffrement de transmission de données, d'une simulation numérique.

12. Support de stockage lisible par un ordinateur comprenant des instructions exécutables par un ordinateur qui, lorsqu'exécutées par un dispositif de traitement comprenant un comparateur, font exécuter au ordinateur un procédé selon l'une quelconque des revendications 1 à 11.

13. Système informatique comprenant un processeur, une mémoire accessible par le processeur et un comparateur, dans lequel le système informatique est adapté pour exécuter un procédé selon l'une quelconque des revendications 1 à 11.

14. Le système informatique selon la revendication 13, dans lequel le système informatique comprend en outre un générateur algorithmique ou physique de nombre aléatoire pour générer un nombre aléatoire, et dans lequel le système informatique est adapté pour fournir une séquence de bits représentant le nombre aléatoire au comparateur.
